# EUROPEAN PATENT APPLICATION

(11) **EP 2 257 056 A1**
(43) Date of publication of application: **01.12.2010**
(21) Application number: 09714152.7
(22) Date of filing: 25.02.2009
(51) Int. Cl.: H04N 5/50, H04N 5/52

(54) **BROADCAST RECEIVING APPARATUS AND CHANNEL SEARCHING METHOD THEREOF**

(30) Priority: 26.02.2008 KR 20080017211
(71) Applicant: LG Innotek Co., Ltd, Seoul 150-721 (KR)
(72) Inventor: LEE, Heung Kyu, Seoul 100-714 (KR)
(74) Representative: Dreiss
(86) International application number: PCT/KR2009/000903
(87) International publication number: WO 2009/107980

(57) **Abstract**

Disclosed are a broadcasting receiver and a method for searching a channel thereof. The method for searching the channel includes searching and storing a channel wherein a broadcasting signal represents a bit error rate less than or equal to a reference bit error rate among channels selected by a tuner unit, and resetting signal adjusting parameters of the tuner unit according to a reception state of the broadcasting signal of the stored channel.

## Description

### [Technical Field]

The embodiment relates to a broadcasting receiver and a method for searching a channel thereof.

### [Background Art]

As broadcasting media are digitalized, digital broadcasting such as ground-wave broadcasting or satellite broadcasting has been commenced. Recently, the digital broadcasting has actively progressed due to the introduction of a digital system into cable broadcasting. In addition, a broadcasting signal is digitalized, so that media utilizing a compression scheme is spread. Accordingly, the convergence of communication, a computer, and broadcasting can be accelerated. Further, a unitary medium having multiple functions can be globalized and support multiple channels, so that various data services can be provided.

### [Disclosure]

### [Technical Problem]

The embodiment provides a broadcasting receiver and a method for searching a channel thereof, capable of storing a channel searched in a search mode and resetting a signal reception state of the stored channel.

The embodiment provides a broadcasting receiver and a method for searching a channel thereof, capable of determining if the channel is stored according to a bit error rate of a broadcasting signal and resetting the signal reception state of the stored channel.

The embodiment provides a broadcasting receiver and a method for searching a channel thereof, capable of determining if the channel is stored according to a bit error rate of a broadcasting signal, which has passed through a booster and a tuner unit, and setting the signal reception state of the stored channel to the optimal state.

### [Technical Solution]

According to the embodiment, a method for searching a channel of a broadcasting receiver includes searching and storing a channel wherein a broadcasting signal represents a bit error rate less than or equal to a reference bit error rate among channels selected by a tuner unit, and resetting signal adjusting parameters of the tuner unit according to a reception state of the broadcasting signal of the stored channel.

According to the embodiment, the broadcasting receiver includes a tuner unit to convert a high frequency signal of a channel selected in a channel search mode into an intermediate frequency signal, a demodulator to demodulate the intermediate frequency signal of the tuner unit and detect a bit error rate, a controller to check a bit error rate of a signal received in the tuner unit to determine if information about a channel of the signal is stored, and reset a signal reception state of the channel, and a storage unit to store the information about the channel by the controller.

### [Advantageous Effects]

The embodiment can reduce search time for a broadcast channel.

### [Description of Drawings]

FIG. 1 is a block diagram showing a broadcasting receiver according to a first embodiment;
FIG. 2 is a flowchart showing a method for searching a channel according to a second embodiment;
FIG. 3 is a flowchart showing a method for resetting signal adjusting parameters of FIG. 2 according to one embodiment; and
FIG. 4 is a flowchart showing a method for resetting signal adjusting parameters of FIG. 2 according to another embodiment.

### [Best Mode]

### [Mode for Invention]

Hereinafter, embodiments will be described with reference to accompanying drawings.

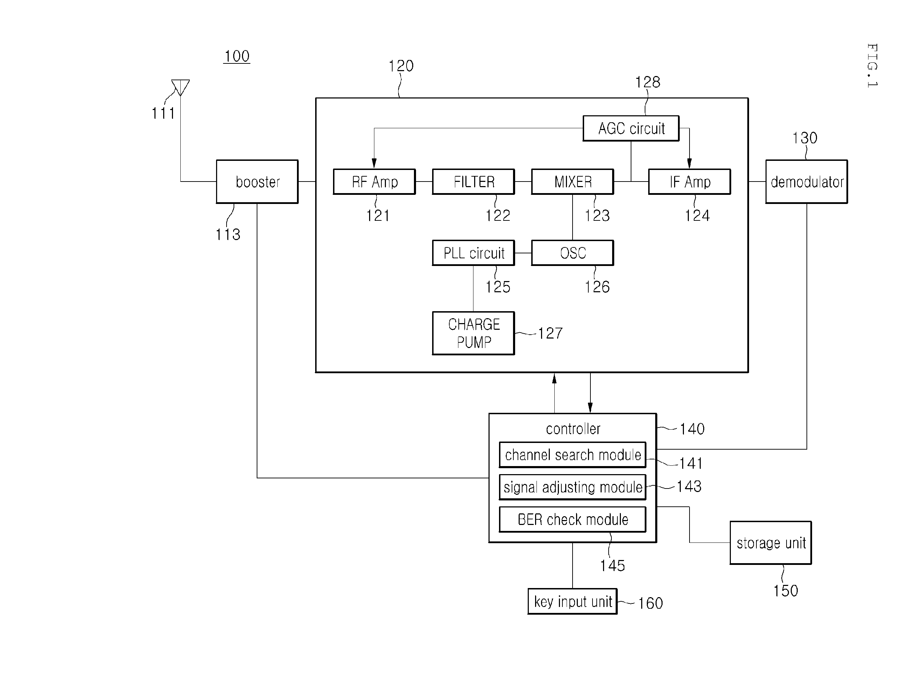

FIG. 1 is a block diagram showing a broadcasting receiver 100 according to the first embodiment.

Referring to FIG. 1, the broadcasting receiver 100 includes a booster (a first amplifier) 113, a tuner unit 120, a demodulator 130, a controller 140, a storage unit 150, and a key input section 160.

The broadcasting receiver 100 is a set to receive and process a broadcasting signal, which has been modulated through at least one scheme, and can be realized by using a TV set, a Set-top Box, a DVD (DVD-RW or DVD+RW), and a PVR (personal video recorder).

The booster 113 is turned on or off by the controller 140 and amplifies or passes through a signal that has been received through an antenna 111. If a high frequency signal of a channel received through the antenna 111 represents weak electric field strength, the booster 113 is turned on to amplify the high frequency signal, thereby improving received electric field strength somewhat. If the high frequency signal of the channel received through the antenna 111 represents strong electric field strength, the booster 113 is turned off to pass through the high frequency signal.

The tuner unit 120 includes an RF (radio frequency) amplifier 121, a filter 122, a mixer 123, an IF (Intermediate Frequency) amplifier 124, a PLL (Phase Locked Loop) circuit 125, an OSC (oscillator) 126, a charge pump 127, and an AGC (Auto Gain Control) circuit 128.

The tuner unit 120 selects a specific channel in a search mode of the controller 140, and converts the signal of the selected channel into an IF signal to be output.

The RF amplifier 121 amplifies an input high frequency signal to a predetermined level. The RF amplifier 121 can be realized by using an LNA (Low Noise Amplifier) to reduce the noise of the signal and increase receive sensitivity.

The filter 122 passes through a signal having a specific wavelength band among signals amplified by the RF amplifier 121, and cuts off signals having other wavelength bands. The filter 122 may be realized by using a BPF (Band Pass Filter), but the present invention is not limited thereto.

The mixer 123 converts the signal, which has passed through the filter 122, into an IF signal. The mixer 123 mixes the high frequency signal of the filter 122 with a local frequency signal of the OSC 126 to output the IF signal. The IF amplifier 124 amplifies the IF signal, which is output from the mixer 123, and outputs the IF signal.

The PLL circuit 125 outputs a reference frequency of the selected channel to the OSC 126, and the OSC 126 outputs a local frequency by using the reference frequency. The charge pump 127 controls the tuning voltage of the PLL circuit 125.

The charge pump 127 changes lock time of the PLL circuit 125 by using a current gain according to pulses. In other words, the charge pump 127 becomes a parameter to determine the quantity of current to be supplied in order to control the tuning voltage of the PLL circuit 125.

The mixer 123, the PLL circuit 125, the OSC 126, and the charge pump 127 may be integrated into an MOPLL (mixer oscillator phase looked loop) IC. The MOPLL IC is realized in the form of one chip. The MOPLL IC converts a high frequency into an IF and outputs the IF.

The AGC circuit 128 detects the gain of a received signal based on the output of the mixer 123, and then regulates the gains of the RF amplifier 121 and the IF amplifier 124.

The AGC circuit 128 includes an auto gain controller, and the auto gain controller changes the time constant of the AGC circuit 128 (AGC TIME CONSTANT) . In other words, when the intensity of a received signal is changed due to fading or other environmental conditions, the auto gain controller adjusts the gain of the broadcasting receiver 100 to a predetermined output level by changing the AGC TIME CONSTANT. For example, if the state of the received signal is normal, the AGC TIME CONSTANT may be changed into SLOW. The AGC TIME CONSTANT may be changed into FAST according to the state of the received signal.

The AGC circuit 128 may include an AGC detector, and the AGC detector regulates the gain of the RF amplifier 121 by using an AGC TOP (Take Over Point). The value of the AGC TOP may be set based on sensitivity, the capability of excluding an adjacent channel, the capability of excluding external noise, QRM, and the like. In addition, if the tuner unit 120 is a CAN (Control Area Network) type tuner, deviation may occur in the power gain and the noise of each channel. In this case, the AGC TOP is set based on the variation in the power gain and the noise of a signal.

The demodulator 130 demodulates the IF signal of the tuner unit 120 into an original signal. The demodulation scheme varies depending on broadcasting scheme, and the broadcasting scheme may include DTTB (Digital Terrestrial Television Broadcasting) or digital cable broadcasting, but the present invention is not limited thereto. The DTTB signal has been modulated through an OFDM (Orthogonal Frequency Division Multiplexing) scheme, and the digital cable broadcasting signal has been modulated through a QAM (Quadrature amplitude modulation) scheme.

The demodulator 130 demodulates the IF signal of the tuner unit 120 through the broadcasting scheme of the input signal to output the IF signal in the form of a transport stream. The transport stream that has been demodulated by the demodulator 130 is delivered to a decoder (not shown).

The demodulator 130 may include an error correction code. The error correction code is used to detect a BER (bit error rate) of the broadcasting signal and store the BER in a register. The BER is delivered to the controller 140. In this case, as the BER detected based on the error correction code is lowered, the broadcasting signal represents better quality. In contrast, as the BER is increased, the broadcasting signal represents worse quality.

The demodulator 130 detects a BER for each signal adjusting parameter of the tuner unit 120. For example, the signal adjusting parameters include the BER of the AGC TIME CONSTANT, the BER of the AGC TOP, and the BER of the charge pump 127.

The tuner unit 120 and the demodulator 130 may be realized by using an NIM (Network Interface Module). The tuner unit 120 may be realized by using a half NIM tuner that is not provided in the demodulator 130.

The controller 140 can be connected to the tuner unit 120 by using a clock signal and a data signal. The controller 140 checks the BER of a parameter relating to a signal reception state by a preset program to control the performance of an MOPLL IC of the tuner unit 120.

The controller 140 controls the booster (the first amplifier) 113, the tuner unit 120, and the demodulator 130 according to keys input into the key input unit 160. Upon receiving a channel searching request, the controller 140 controls an on/off operation of the booster (the first amplifier) 113 and a channel searching operation of the tuner unit 120. Such the channel searching operation optimizes the reception state of a signal from each channel according to the area or the communication environment of the broadcasting receiver.

The controller 140 includes a channel searchmodule 141, a signal adjusting module 143, and a BER (Bit Error Rate) check module 145. The channel search module 141 sets the booster 113 to an on-state or an off-state, and controls the channel selection of the tuner unit 120.

The channel search module 141 determines if a channel is stored or not according to the BER of the channel selected through the BER check module 145. If the BER of the broadcasting signal of the selected channel is less than or equal to a reference BER, the information about the selected channel is stored in the storage unit 150.

The channel search module 141 checks the BER of the broadcasting signal in the on/off state of the booster 113 and stores information about a channel where the broadcasting signal represents a BER less than or equal to the reference BER in the storage unit 150.

After the channel searching operation has been terminated by the channel search module 141, the signal adjusting module 143 resets signal adjusting parameters according to the signal reception state of the channel stored in the storage unit 150.

In this case, the signal adjusting parameters are reset in such a manner that the BERs of the AGC TIME CONSTANT, the AGC TOP, and the charge pump of the signal received through the channel are less than or equal to the reference BER.

The BERs of the signal adjusting parameters may increase or decrease according to the installation position, the installation area, or the communication environment of the broadcasting receiver. Since the BER is based on the temporal statistics, the BER having a fixed value is utilized as a reference BER.

The BERs of the signal adjusting parameters are checked during a predetermined period of time and a statistical value thereof is calculated. If the statistical value of the BERs is less than or equal to a reference value, the screen image of the channel represents good quality. If the statistical value of the BERs exceeds the reference value, the screen image of the channel represents bad quality.

The signal adjusting module 143 changes the signal adjusting parameters until the BER of each signal adjusting parameter is less than or equal to the reference value. When the BER is changed, the signal reception state of the stored channel is optimized.

The BER check module 145 checks the BER of each signal received therein from the demodulator 130 and provides the BER to the channel search module 141 and the signal adjusting module 143.

The channel search module 141 stores the channels representing BERs less than or equal to a reference BER in the storage unit 150 based on the BER of the channel checked by the BER check module 145. The signal adjusting module 143 resets the signal reception state of the stored channel to optimize the signal reception state of each channel. The controller 140 reduces time spent in the channel selection because the signal adjusting module 143 sets only the signal reception state of the stored channel without setting signal reception states of all channels.

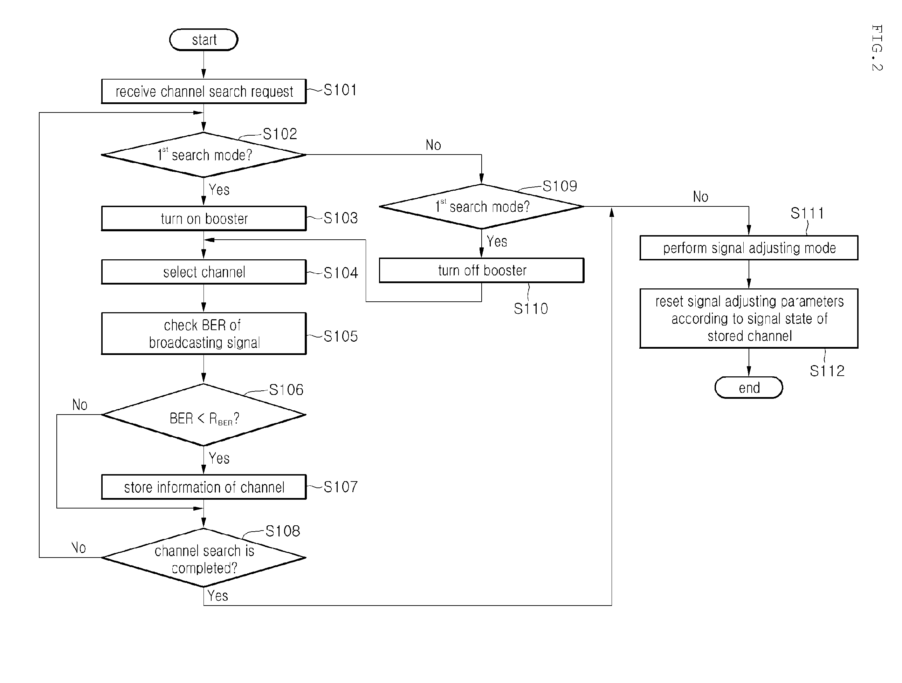

FIG. 2 is a flowchart showing a method for searching a channel according to the second embodiment. Hereinafter, the second embodiment will be described with reference to description of components of FIG. 1.

Referring to FIG. 2, if a channel searching request is received (step S101), it is determined if a present mode is a first search mode (step S102). If the present mode is the first search mode, the booster 113 is turned on (step S103). The high frequency signal received through the antenna 111 is amplified by the booster 113, and a channel is selected by the tuner unit 120 (step S104).

The BER of the broadcasting signal that has been received is detected by the demodulator 130.

The controller 140 checks the BER of the broadcasting signal that has been received through the channel (step S105), and determines if the BER is less than or equal to a reference BER R_{BER}. The BER of the broadcasting signal is detected based on an error correction code of the demodulator 130. The check and comparison of the BER of each channel may be performed by the controller 140.

If the BER of the broadcasting signal carried through the channel is less than or equal to the reference BER R_{BER}, the information about the selected channel is stored in the storage unit 150 (step S107). The information about the channel stored in the first search mode may include information about the frequency of each channel and information about the on-state of the booster 113.

After the information about the channel has been stored, it is determined if the channel searching operation has been completed (step S108). If the channel searching operation has not been completed, a next channel is selected. If the BER of the broadcasting signal of the selected channel is less than or equal to the reference BER R_{BER}, the channel is stored in the storage unit 150.

In the first search mode, when the booster 113 is turned on, the channel searching operation is performed with respect to all channels, and information about a channel where the broadcasting signal represents a BER less than or equal to the reference BER R_{BER} among the searched channels is stored.

If the first search mode has been terminated, a second search mode is performed (step S109).

In the second search mode, the booster 113 is turned off (step S110), and the search for all channels is performed. In the second search mode, when the booster 113 is turned off, all channels are sequentially selected (Step S104). It is determined if BERs of broadcasting signals of the channels are less than or equal to the reference BER R_{BER} (steps S105 and S106), and the information about the channel where the broadcasting signal represents the BER less than or equal to the reference BER R_{BER} is stored in the storage unit 150 (step S107).

The information about the channels stored in the second search mode includes information about the frequency of each channel and information about the off-state of the booster 113.

In the first and second search modes, information about channels representing a BER less than or equal to the reference BER R_{BER} in the on/off state of the booster 113 is stored. According to the embodiment, the channel can be searched by shifting the on-state of the booster into the off-state or shifting the off-state of the booster into the on-state of the booster.

After the second search mode has been terminated, a signal adjusting mode is performed (step S111).

In the signal adjusting mode, the signal adjusting module 142 of the controller 140 sets signal adjusting parameters according to the signal reception state of the channel stored in the storage unit 150 (step S112). In the signal adjusting mode, the signal adjusting parameters are reset according to the position, the area, or the communication environment of the broadcasting receiver, so that the optimal signal can be output. The signal adjusting parameters include the AGC TIME CONSTANT, the AGC TOP, and the charge pump, and can be set as optimal values according to the signal reception state.

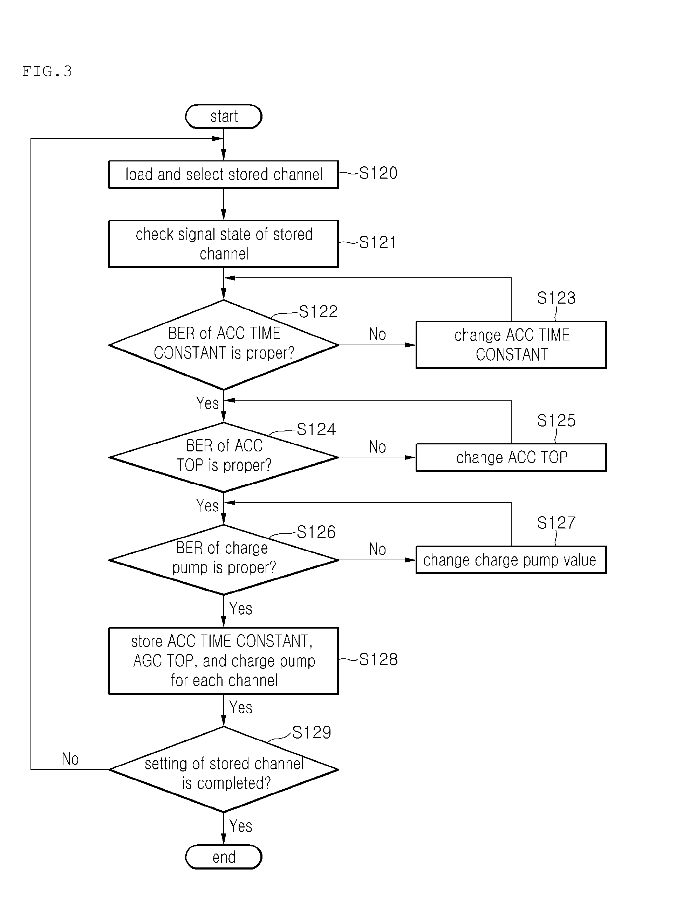

FIG. 3 is a flowchart showingamethodof setting signal adjusting parameters according to one embodiment. The following description related to FIG. 3 will be made with reference to description of the components of FIG. 1.

Referring to FIG. 3, in order to reset the signal adjusting parameters, a channel stored in the storage unit 150 is loaded, and selected by the tuner unit 120 (step S120). In this case, the booster 113 is turned on or off according to the information about the channel.

The demodulator 130 checks the reception state of a signal that has been demodulated (Step S121).

The signal reception state of the channel may be set to the optimal reception state by adjusting the signal adjusting parameters of the tuner unit 120.

The signal adjusting parameters may include the AGC TIME CONSTANT, the AGC TOP, and the charge pump. The AGC TIME CONSTANT is used to regulate the gain of the broadcasting receiver such that the signal intensity received in the tuner unit 120 can be maintained at a predetermined output level when the signal intensity is changed due to fading or other environment conditions. The AGC TOP is used to regulate the gain of the RF amplifier 121. The charge pump is used to regulate the tuning voltage of the PLL circuit 125.

The signal adjusting parameters are used to adjust the received signal based on the initial values thereof. The initial values have been preset in the manufacture line or predetermined when searching for a previous channel.

It is determined if the BER of the AGC TIME CONSTANT is proper by checking a signal reception state of the channel (step S122). Step S122 is to determine if the BER of the AGC TIME CONSTANT is less than or equal to a reference BER based on the signal reception state of the channel when the initial value is applied to the AGC TIME CONSTANT. If the AGC TIME CONSTANT is not proper, the signal adjusting module 143 of the controller 140 changes the AGC TIME CONSTANT (step S123). The above process may repeat to set the optimal AGC TIME CONSTANT satisfying that the BER of the AGC TIME CONSTANT for the channel is less than or equal to the reference BER.

If the BER of the AGC TIME CONSTANT is proper, it is determined if the BER of the AGC TOP is proper (step S124) . Step S124 is to determine if the BER of the AGC TOP is less than or equal to the reference BER based on the signal reception state of the channel when the initial value is applied to the AGC TOP. If the BER of the AGC TOP is not proper, the signal adjusting module 143 of the controller 140 changes the AGC TOP (step S125) . The above process may repeat to set the optimal AGC TOP satisfying that the BER of the AGC TOP for the channel is less than or equal to the reference BER.

If the BER of the AGC TOP is proper, it is determined if the BER of the charge pump is proper (step S126) . Step S126 is to determine if the BER of the charge pump is less than or equal to the reference BER based on the signal reception state of the channel when the initial value is applied to the charge pump. If the BER of the charge pump is not proper, the signal adjusting module 143 of the controller 140 changes the value of the charge pump (step S127). The above process may repeat to set the optimal value of the charge pump satisfying that the BER of the charge pump for the channel is less than or equal to the reference BER.

The AGC TIME CONSTANT, the AGC TOP, and the charge pump value for each channel are stored (step S128). The stored parameter values are used to set the signal reception state of each channel stored in the storage unit 150 to the optimal state.

It is determined if the setting of the stored channel have been completed (step S129). If the setting of the storage channel has not been completed according to the determination result, the channel stored in the storage unit 150 is loaded, and a channel is selected. Therefore, the above process may repeat.

The resetting of the signal adjusting parameters is not performed with respect to all channels but performed with respect to the channel stored in the storage unit 150. Accordingly, time to search a channel can be reduced. In addition, according to the embodiment, the resetting sequence of the AGC TIME CONSTANT, the AGC TOP, and the charge pump value may be changed, but the present invention is not limited thereto.

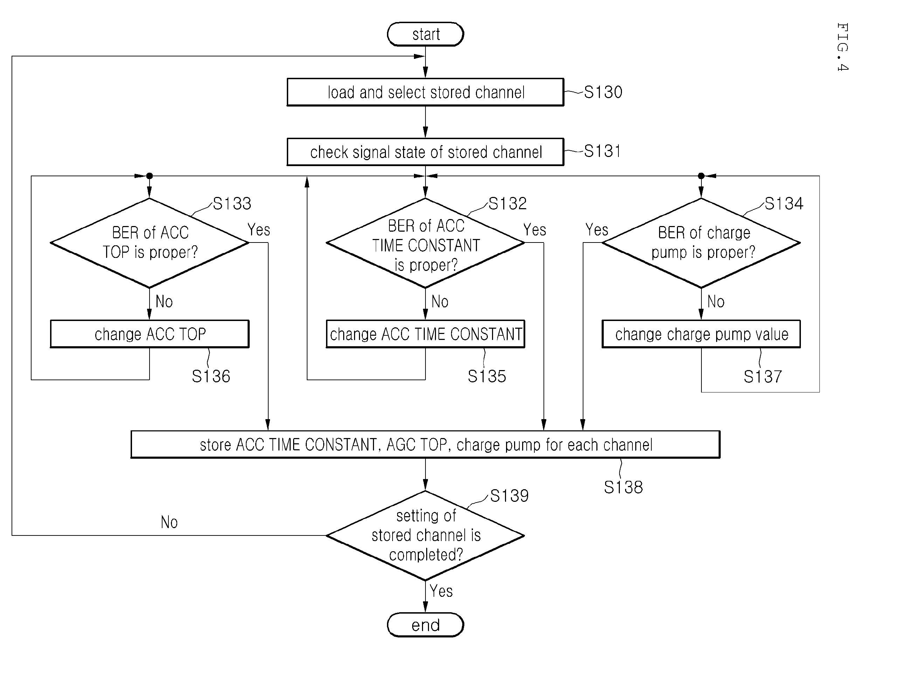

FIG. 4 is a flowchart showing a method of resetting the signal adjusting parameters of FIG. 2 according to another embodiment. Hereinafter, the following description related to FIG. 4 will be made based on the description of the components of FIG. 1.

Referring to FIG. 4, in order to reset the signal adjusting parameters, the channel stored in the storage unit 150 is loaded, and the tuner unit 120 selects the loaded channel (step S130). In this case, the booster 113 is turned on or off according to the information about the channel.

The BER of a signal demodulated by the demodulator 130 is checked (step S131).

In this case, the signal reception state of the channel can be set to the optimal reception state by adjusting the signal adjusting parameters of the tuner unit 120. The signal adjusting parameters may include the AGC TIME CONSTANT, the AGC TOP, and the charge pump.

The AGC TIME CONSTANT is used to regulate the gain of the broadcasting receiver such that the intensity of a signal received in the tuner unit 120 can be maintained at a predetermined output level when the signal intensity is changed due to fading or other environment conditions. The AGC TOP is used to regulate the gain of the RF amplifier 121. The charge pump is used to regulate the tuning voltage of the PLL circuit. The above signal adjusting parameters are initial values and used to regulate the received signal. The initial values may be set in the manufacture line or set when searching for a previous channel.

It is determined if the AGC TIME CONSTANT, the AGC TOP, and the charge pump value for the signal received through the channel are proper (step S132, S133, and S134).

If the BER of the AGC TIME CONSTANT is not proper, the AGC TIME CONSTANT is changed until the BER of the AGC TIME CONSTANT is proper (step S135). In this case, the BER of the AGC TIME CONSTANT becomes proper when the BER of the AGC TIME CONSTANT is less than or equal to the reference BER with respect to the signal of the channel.

If the BER of the AGC TOP is not proper, the AGC TOP is changed until the BER of the AGC TOP is proper (step S136). In this case, the BER of the AGC TOP becomes proper when the BER of the AGC TOP is less than or equal to the reference BER with respect to the signal of the channel.

If the BER of the charge pump is not proper, the charge pump value is changed until the BER of the charge pump is proper (step S137). In this case, the BER of the charge pump becomes proper when the BER of the charge pump is less than or equal to the reference BER with respect to the signal of the channel.

The AGC TIME CONSTANT, the AGC TOP, and the charge pump values for each channel are stored (step S138). The values of the signal adjusting parameters for each channel allow the signal received in each channel to be in an optimal reception state.

Then, it is determined if the setting of the stored channel has been completed (step S139). If the setting of the stored channel has not been completed, another stored channel is loaded and selected, and the above process may repeat.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the embodimetns. In additioin, the difference between the variations and modifications should be understood by those skilled in the art within the scope of the disclosure, the drawings and the appended claims.

### [Industrial Applicability]

The embodiment is applicable to a broadcasting receiver. The embodiment is applicable to a digital broadcasting receiver.

According to the embodiment, a tuner to selectively process a ground wave signal and a cable signal can be installed in sets such as a TV, a DVD, a PVR, and a set-top box.

## Claims

1. A method for searching a channel of a broadcasting receiver, the method comprising:
searching and storing a channel wherein a broadcasting signal represents a bit error rate less than or equal to a reference bit error rate among channels selected by a tuner unit; and
resetting signal adjusting parameters of the tuner unit according to a reception state of the broadcasting signal of the stored channel.

2. The method of claim 1, wherein the channel is searched by turning on or off a booster provided in a front stage of the tuner unit.

3. The method of claim 2, wherein the searching of the channel includes:
a first search mode in which the booster is turned on, and a channel where a broadcasting signal passing through the booster and the tuner unit represents a bit error rate less than or equal to the reference bit error rate is searched; and
a second search mode in which the booster is turned off, and a channel where a broadcasting signal passing through the booster and the tuner unit represents a bit error rate less than or equal to the reference bit error rate is searched when the channel searching operation is completed through the first search mode.

4. The method of claim 1, wherein the signal adjusting parameters include at least one of an auto gain control time constant, a auto gain control take over point, and a charge pump value.

5. The method of claim 1, wherein the resetting of the signal adjusting parameters comprises:
selecting the stored channel;
changing the signal adjusting parameters until bit error rates of the signal adjusting parameters of the channel are less than or equal to a reference bit error rate; and
storing the signal adjusting parameters of the channel.

6. The method of claim 5, wherein the changing of the signal adjusting parameters comprises:
changing an auto gain control time constant until a bit error rate of the auto gain control time constant of the broadcasting signal received through the channel is less than or equal to the reference bit error rate;
changing an auto gain control take over point until a bit error rate of the auto gain control take over point of the broadcasting signal received through the channel is less than or equal to the reference bit error rate; and
changing a charge pump value until a bit error rate of the charge pump value of the broadcasting signal received through the channel is less than or equal to the reference bit error rate.

7. A broadcasting receiver comprising:
a tuner unit to convert a high frequency signal of a channel selected in a channel search mode into an intermediate frequency signal;
a demodulator to demodulate the intermediate frequency signal of the tuner unit and detect a bit error rate;
a controller to check a bit error rate of a signal received in the tuner unit to determine if information about a channel of the signal is stored, and reset a signal reception state of the channel; and
a storage unit to store the information about the channel by the controller.

8. The broadcasting receiver of claim 7, further comprising a booster electrically connected to a front stage of the tuner unit, wherein the booster is turned on or off by the controller according to channel search modes.

9. The broadcasting receiver of claim 7, wherein the controller resets signal adjusting parameters of the tuner unit according to the signal reception state of the channel that has been stored.

10. The broadcasting receiver of claim 7, wherein the signal adjusting parameters include an auto gain control time constant used to regulate a receive gain of the tuner unit, an auto gain control take over point used to regulate an amplification gain in the tuner unit, and a charge pump value used to regulate a tuning voltage.

11. The broadcasting receiver of claim 7, wherein the tuner unit comprises:
a first tuner unit to amplify the high frequency signal;
a mixer to mix the high frequency signal with a local frequency signal and convert the mixed signal into an intermediate frequency signal;
a second amplifier to amplify the intermediate frequency signal of the mixer;
an AGC circuit to detect a gain of the frequency signal to regulate a gain of the first amplifier;
an oscillator to output the local frequency signal;
a PLL circuit to output a reference frequency signal to the oscillator; and
a charge pump to supply a tuning voltage to the PLL circuit.

12. The broadcasting receiver of claim 11, wherein the mixer, the oscillator, the PLL circuit, and the charge pump are integrated into a mixer oscillator phase looked loop IC.

13. The broadcasting receiver of claim 7, wherein the controller comprises:
a channel search module to store a channel representing a bit error rate less than or equal to a reference bit error rate among channels searched through control of the tuner unit and the booster;
a signal adjusting module to check a signal reception state of the channel that has been stored in the storage unit to reset a signal reception parameter of the tuner unit if a channel search operation of the channel search module has been completed; and
a BER check module to check the bit error rate of the demodulator.

14. The broadcasting receiver of claim 7, wherein the storage unit stores a frequency of the channel, a booster on/off state for each channel, and signal adjusting parameter values for each channel.

15. The broadcasting receiver of claim 14, wherein the signal adjusting parameter values for each channel are set to enable a bit error rate of an auto gain control time constant, a bit error rate of an auto gain control take over point, and a bit error rate of a charge pump for the channel to be less than or equal to a reference value.
